# EUROPÄISCHE PATENTANMELDUNG

(11) **EP 1 804 220 A1**
(43) Veröffentlichungstag der Anmeldung: **04.07.2007**
(21) Anmeldenummer: 05028644.2
(22) Anmeldetag: 29.12.2005
(51) Int. Cl.: G07F 7/10, G07C 9/00

(54) **Verfahren zur berechtigten Gewährung eines Dienstes und portables Gerät zu dessen Durchführung**

(71) Anmelder: AXSionics AG, 2502 Biel/Bienne (CH); Siemens Schweiz AG, 8047 Zürich (CH)
(72) Erfinder: Cattin-Liebl, Roger, 2540 Grenchen (CH); Müller, Lorenz, 2505 Biel (CH); Jacomet, Marcel, 2543 Lengnau (CH); Rollier, Alain, 6422 Steinen (CH); Brändli, Willi, 8962 Bergdietikon (CH); Wenger, Bruno, 8804 Au (CH)
(74) Vertreter: Kley, Hansjörg

(57) **Zusammenfassung**

Gängige elektronisChe Karten (10) wie z.B. Proximity Cards kurz SmartCards können Daten zu einer Leseeinheit im Bereich bis ca. 10 cm übertragen. Zur Komfortverbesserung werden «Boosters» eingesetzt, die im wesentlichen eine Funkverlängerung darstellen. Dies ist jedoch hinsichtlich Autonomie, Funktion (wg. Terminierung) und von den verschiedenen Anwendungen her nicht zufriedenstellend- Es wird ein Verfahren vorgeschlagen, bei dem auf ein portables Gerät (30) von auf einer Mehrzahl von verschiedenen SmartCards (10) gespeicherte dienstspezifische Kennzeichen übertragen (40) werden Das portable Gerät (30) seinerseits überträgt über mehrere verschiedene Kommunikationsverbindungen (70) eines oder mehrere der vorgenannten Kennzeichen, damit ein Zugang zu einem Dienst freigeschaltet werden kann. Durch eine Zuordnung von Dienst zum entsprechenden erlaubten Kommunikationsverbindung (70) ist ein modulares System geschaffen, das für einem Benutzer einen vielfältigen Zugang zu Diensten ermöglicht.

## Beschreibung

Die vorliegende Erfindung betrifft ein Verfahren zur berechtigten Gewährung eines Dienstes gemäss dem Oberbegriff des Patentanspruches 1 und ein portables Gerät zu dessen Durchführung gemäss dem Oberbegriff des Patentanspruches 11.

In dieser Schrift werden unter dem Begriff «elektronische Karte» oder «elektronischem medium» oder kurz «Medium» generell elektronische Ausweiskarten mit einem identifizierenden Kennzeichen subsummiert, die u.a. auch unter den Begriffen wie SmartCard, Chipkarte, elektronisches Billett, Proximity Cards, Vincinity Cards und Mitarbeiter-Badges bekannt sind. Proximity Cards und Vincinity Cards sind gemäss ISO standardisiert, dies ist in ISO 14443 [1] und ISO 15693 [2] festgelegt, daneben gibt es unter den Proximity Cards und Vincinity Cards auch proprietäre Ausprägungen wie z.B. LEGIC prime.

Die in der Liste der verwendeten Abkürzungen und Akronyme aufgeführten Begriffe und Definitionen sind im Sinne eines Glossars integraler Bestandteil dieser Schrift. Daher werden nicht alle Akronyme und Begriffe speziell eingeführt, Anstelle einer deutschen Nichtfachsprache werden für einzelne Einheiten die gängigen englischen Ausdrücke verwendet bzw. in der erwähnten Liste teilweise auch zweisprachig aufgeführt. Ebenso ist teilweise die mit einem Bauelement realisierte Funktion mit dem gleichen Bezugszeichen wie das Bauelement selber versehen. Zur Vermeidung von Unklarheiten werden darüber hinaus für einzelne Einheiten oder Verfahren die gängigen englischen Ausdrücke wie z.B. «challenge/response» verwendet.

Proximity Cards PICC können Daten zu einer Leseeinheit PCD im Bereich von etwa 1 bis 10 cm übertragen. Daher ist für die Gewährung des Zutritt zu einer Zone eine Person gezwungen, die Karte in die Nähe der Leseeinheit PCD zu bringen. Dies ist insbesondere bei der Zufahrt zu einer Garage nachteilig, da dazu das Fenster des Fahrzeugs geöffnet werden muss. Dabei besteht insbesondere die Gefahr, dass die Karte bei dieser Manipulation auf den Boden fällt.

Auf einer SmardCard sind personenbezogene Kennzeichen und/oder Berechtigungen gespeichert. Unter den Begriff Kennzeichen und/oder Berechtigungen fallen auch Schlüssel im Sinne der Kryptographie. Diese Kennzeichen bzw. Berechtigungen erlauben ggf. zusammen mit weiteren Interaktionen eines Benutzers einen Zugang zu einem Ort oder zum Bezug einer Leistung oder zum Bezug einer Information.

Der Begriff «Dienst» umfasst in dieser Schrift sowohl den klassischen Begriff aus der Telekommunikation wie z.B. ein Zusatzdienst. Ebenso wird in dieser Schrift unter dem Begriff «Dienst» jedwelcher Zugang zu einem Ort oder zu einer Leistung oder zum Bezug einer Information oder zum Bezug von Geld subsummiert.

SmartCards besitzen eine Luftschnittstelle, z.B. gemäss ISO/IEC 14443 [1], und/oder eine Kontaktschnittstelle, z.B. gemäss ISO 7816 [3]. Beide Schnittstellen sind für eine Kommunikation im Nahbereich ausgelegt. Im Falle einer drahtlosen Verbindung beträgt dieser Nahbereich etwa 10cm. Eine Kommunikation mit solchen Karten ist über eine grössere Distanz nicht möglich.

Für eine Kommunikation über grössere Distanzen sind sogenannte «Combi-Booster» bekannt, beispielsweise von der Firma Nedap [4, 5]. Ein «Booster» ist ein elektronisches tragbares Gerät (=elektronische Hülle), in das eine Proximity Card eingeschoben werden kann. Ein Kennzeichen, meistens ein personenbezogenes - nachstehend «personifiziertes» Kennzeichen genannt -, wird von der Proximity Card über die Funkschnittstelle in die Hülle transferiert. Diese Hülle sendet das empfangene Kennzeichen auf einer anderen Frequenz, z.B. auf dem ISM-Band von 2.45 GHz an eine ortsfeste Empfangseinheit. Das empfangene Kennzeichen wird in einem Hintergrundsystem ausgewertet und bei Übereinstimmung wird ein Freigabesignal zur Gewährung des Zugangs erzeugt. Die Hülle kann dabei ebenfalls ein weiteres Kennzeichen enthalten, so dass der Zugang nur mit der betreffenden Hülle und der Karte möglich ist. Bei den eingangs genannten proprietären Ausprägung ist dabei zu beachten, dass die Verbindung in der Hülle nicht terminiert werden kann, es sei denn, in der Hülle wird ein entsprechender proprietärer Chip eingebaut. Dies ist begründet durch die verwendete und nicht offen gelegte Layer 1/ Layer 2 - Übertragung durch ein Scrambling.

Ein solches System ist auch für eine zugangskontrolle wünschenswert, bei der eine Person eine solche Hülle mit einer eingesteckten elektronischen Karte trägt. Die vorgenannte Lösung für Parkanlagenzufaxart ist aus folgenden Gründen nicht für weitere Anwendungen befriedigend:
a) Die Autonomie ist beschränkt bzw. muss durch eine Installation in einem Fahrzeug mit drahtgebundener Energiezuführung betrieben werden.
b) Je nach Art des funktechnisch realisierten Zugangs muss eine entsprechend ausgestattete elektronische Hülle mitgeführt werden.

Für die Gewährung eines einzelnen Dienstes, wie z.B, der Bezug von Geld an einem Geldausgabeautomaten ist in DE 101 04 409 B4 [6] ein Verfahren offenbart, bei dem der Geldausgabeautomat am Mobiltelefon angebrachten Code, vorzugsweise ein sog. Barcode liest. Dieser Code beinhaltet z.B. eine eineindeutige Adresse, wie z.B. MAC-Adresse für eine erste Authentifizierung. Die weiteren Schritte zur Ausgabe von Geld werden über eine Funkkommunikation vorgenommen, z.B. über Bluetooth.

Bereits sind auch schon portable elektronische Geräte vorgeschlagen worden wie z.B. in der europäischen Patentanmeldung EP 05013418.8 [7], bei denen der vorgenannte Nachteil bezüglich der stark eingeschränkten Autonomie durch ein «Wecken» der elektronischen Hülle durch ein Nahfeld behoben wird. Anschliessend an das «wecken» mit einer ersten tieferen Frequenz des portablen elektronischen Gerätes erfolgt intermittierend eine bidirektionale Kommunikation mit einer Zugangseinheit auf einer höheren Frequenz. Nach einer gewissen Zeit ohne Kommunikation kann vorgesehen werden, dass das portable Gerät wiederum in einen sogenannten Schlafzustand zurückkehrt. Dadurch kann eine bemerkenswert hohe Autonomie erreicht werden.

Diese Lösung behebt den vorstehend unter b) genannten Nachteil noch nicht befriedigend, da diese Lösung auf einen bestimmten physischen Zugang und auf eine bestimmte Smartcard mit einem bestimmten Dienst beschränkt ist.

Der vorliegenden Erfindung liegt die Aufgabe zugrunde, ein Verfahren für ein ein Kennzeichen enthaltendes Medium zur Gewährung eines Dienstes wie z.B. Zutritt zu einer Zone oder zum berechtigten Bezug einer Leistung zu schaffen, welches Verfahren einerseits die vorstehend genannten Nachteile überwindet und darüber hinaus ermöglicht:
- einsetzbar für verschiedene Typen von elektronischen Karten/Medien;
- einsetzbar für verschiedene Karten gleichen Typs, bei denen vom Herausgeber Daten/Berechtigungen in verschiedener Weise, d.h. in getrennten Segmenten abgelegt und/oder zugänglich sind;
- kompatibel mit verschiedenen Zugangseinheiten;
- Entkopplung der Art der Kommunikationsverbindung von der auf einer Smartcard gespeicherten Berechtigung;
- einfachste Handhabung durch den Benutzer.

Ebenso ist es Aufgabe der Erfindung, zur Durchführung des vorgenannten verfahrens ein portables Gerät anzugeben.

Diese Aufgabe wird für das Verfahren durch die im Patentanspruch 1 angegebenen Merkmale und für das portable Gerät durch die im Anspruch 11 angegebenen Merkmale gelöst.

Durch das erfindungsgemässe Verfahren, wonach
die erste Kommunikationsverbindung zwischen dem portablen Gerät und dem Medium für eine Mehrzahl von auf dem
Medium gespeicherten dienstespezifischen Kennzeichen und/oder für Mehrzahl von verschiedene Typen von Medien aufbaubar ist, so dass für jeden Dienst zwischen zugangseinheit und Medium eine gesicherte End-zu-End-Verbindung aufgebaut wird;
eröffnet sich für einen Benutzer ein gesicherter Zugang zu Diensten in einer modularen Weise. «Nahbereich» der ersten Kommunikationsverbindung bedeutet, dass sich das Medium in unmittelbarer Nähe im Bereich bis zu einigen Millimetern vom portablen Gerät befindet. Mittels einer Mehrzahl je wenigstens ein dienstspezifisches Kennzeichen enthaltende Medien können so dienstabhängig Berechtigungen zum Bezug einer Leistung oder zum Zugang zu einer Zone erlangt werden. Für einen Herausgeber eines Mediums wie einer SmartCard hat dies den Vorteil, dass die einem Dienst zugeordneten gespeicherten Kennzeichen, unabhängig von anderen administriert werden können. Die Funktion und die Sicherheit sind trotz des Vehikels «portables Gerät» wegen der gesicherten End-zu-Endverbindung gewährleistet.

Durch die bidirektionale Kommunikation zwischen dem portablen Gerät und der Zugangseinheit ist es möglich, dass mit einem in der Zugangseinheit befindlichen konventionellen Kartenleser die durch das portable Gerät abgesetzte Karte in der Zugangseinheit emuliert wird. Dadurch können einerseits bestehende zugangseinheiten weiter verwendet werden und andererseits braucht die Schnittstelle zwischen zugangseinheit und einen zugeordneten Server oder Managementsystem nicht offengelegt zu werden. Dies ermöglicht die Entkopplung von Zugang zu einem Dienst von der konkreten übertragungsmässigen Ausgestaltung zu einer zugangseinheiten wie z.B. einem Kartenleser.

In einer Weiterbildung des Verfahrens kann auf dem portablen Gerät ein Eingabemittel angeordnet sein für die Authentifizierung des Benutzers aufgrund einer Benutzerinteraktion. Als Eingabemittel können ein biometrischer Sensor, z.B. Fingerprint-Sensor oder Tasten angeordnet sein. Mit Eingaben über die Tasten können Konfigurationen vorgenommen werden. Zweckmässigerweise ist darüber hinaus ein Display vorzusehen, z.B. ein Foliendisplay. Auf dem Display können für die Authentifizierung sowohl «Challenges» als auch «Responses» angezeigt werden, die zur Authentifizierung eines Benutzers benötigt werden. Ebenso dient das Display zur Anzeige von Betriebszuständen bezüglich des portablen Gerätes wie auch bezüglich der Gewährung eines Dienstes. Die Bedienelemente dienen nicht nur der vorgenannten Authentifizierung und/oder Konfigurierung sondern erlauben, dass der Zugang zu einem ggf. kostenpflichtigen Dienst aufgrund einer aktiven Willenshandlung freigeschaltet wird.

Weitere vorteilhafte Ausgestaltungen der Erfindung sind in weiteren Ansprüchen angegeben.

Die Erfindung wird nachfolgend anhand der Zeichnung beispielsweise näher erläutert. Dabei zeigen:
- Figur 1: Räumliche Anordnung der verschieden funktionalen Einheiten an einer Durchgangszone;
- Figur 2.1: Vorderansicht einer Hülle;
- Figur 2.2: Querschnitt einer Hülle und einer zugeordneten Zugangseinheit in einer zweiten Ausführungsform;
- Figur 2.3: Rückansicht/Schnitt einer Hülle;
- Figur 3: Hülle mit partiell eingeschobener Karte;
- Figur 4.1: Explosivdarstellung der Grundkomponenten und konstruktive Ausgestaltung der Hülle im Querschnitt von der Seite;
- Figur 4.2: konstruktive Ausgestaltung im Querschnitt von der in Längsrichtung;
- Figur 5: Blockschaltbild eines portablen Gerätes;
- Figur 6: Darstellung des modularen Konzepts für die verschiedenen Dienste;
- Figur 7: Darstellung der gesicherten Kommunikationsverbindungen und der Zuordnung der Dienste.

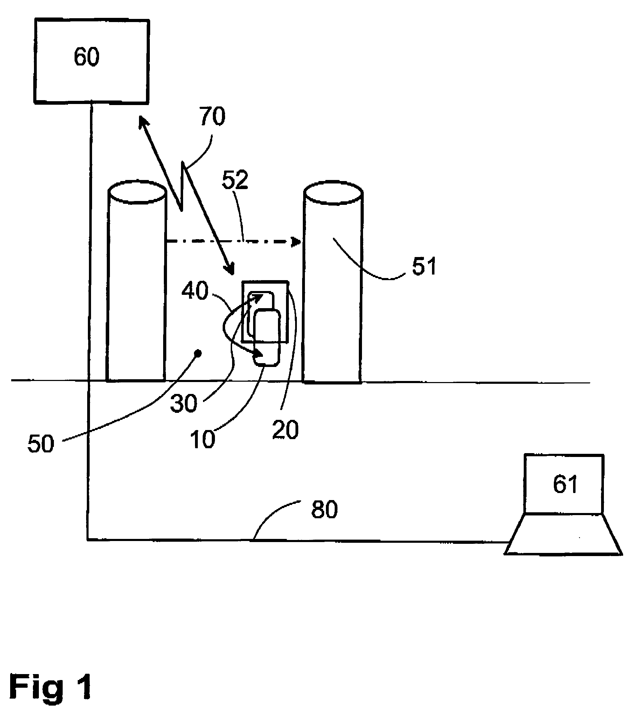

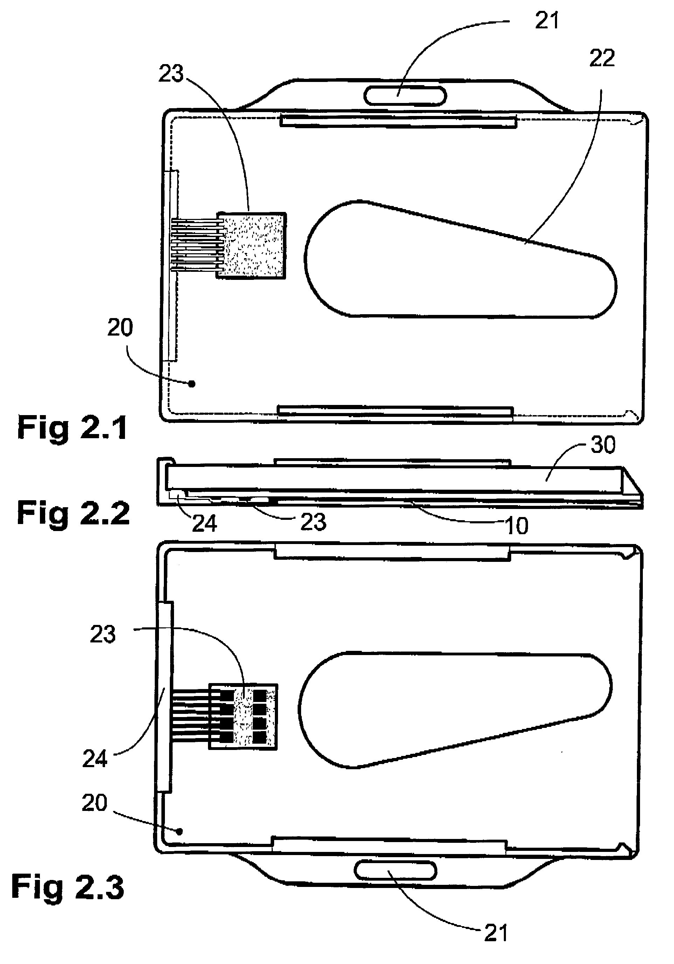

Ein Überblick über die prinzipielle Funktion des erfindungsgemässen Verfahrens und die involvierten Komponenten wird nachfolgend anhand der Figur 1 gegeben. Detaillierte Angaben zu den einzelnen Komponenten und ihrer Funktion erfolgen mit den weiteren Figuren 2 bis 7.

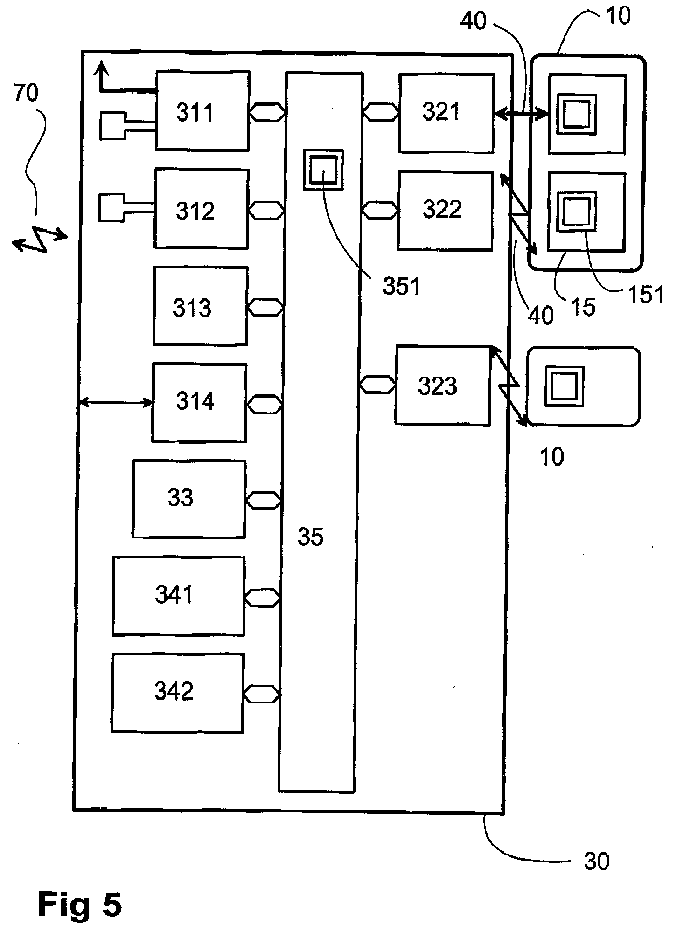

Figur 1 zeigt die räumliche Anordnung der verschieden funktionalen Einheiten bzw. Komponenten an einer Durchgangszone 50, die durch eine zwei Durchlass-Säulen 51 gebildet wird. Ein auf einer Karte 10 befindliches Kennzeichen für den Zugang zu einem Dienst wird von einem Medium 10, vorzugsweise eine Smartcard 10 auf das portable Gerät 30 über eine erste gesicherte Kommunikationsverbindung 40 übertragen. Das portable Gerät 30 etabliert eine zweite Kommunikationsverbindung 70 zu einer Zugangseinheit 60. Über diese zweite ebenfalls gesicherte Kommunikationsverbindung 70 wird das vorgenannte Kennzeichen und/oder ein weiteres Kennzeichen zur Zugangseinheit 60 übertragen. Das so übertragene Kennzeichen wird über eine Verbindung 80 in einer im Hintergrund befindlichen Einheit 61, z.B. ein Authentifikationsserver 61, ausgewertet, um aufgrund eines Vergleichs festzustellen, ob dadurch der Zugang gewährt oder eine bestimmte Leistung bezogen werden darf. Bei der vorgenannt erläuterten Übertragung des Kennzeichens ist eingeschlossen, dass keinesfalls nur das auf der Smartcard 10 gespeicherte Kennzeichen im Klartext übermittelt wird. Vielmehr wird eine Abbildung (math.) des Kennzeichens aufgrund einer Verschlüsselung oder aufgrund einer Verknüpfung übermittelt. Zur Verschlüsselung und Authentifizierung sind wahlweise auf dem portablen Gerät 30 und/oder auf dem Medium 10 die entsprechenden Schlüssel «keys» und digitale «identity credentials» gespeichert. Die in Fig. 1 gezeigte Lichtschranke zwischen den beiden Durchlass-Säulen kann dient beispielsweise der Sicherung der Zone 50 selber, um ein Einklemmen einer Person durch eine automatische Türe zu vermeiden. Nicht explizit dargestellt sind die konkreten Ausprägung eines Dienstes, wie Lieferung einer digitalen Ware wie z.B. ein Musikstück oder der Zugang zu einer bestimmten Information, usw. Mit der optischen Schnittstelle 52 ist ferner angedeutet, dass für ein sog. Challenge/Response System ein Challenge optisch zum portablen Gerät 30 übertragen wird, aufgrund dem mittels eines Kryptocontrollers im Gerät 30 und/oder in der SmartCard 10 eine Response berechnet wird. Dabei ist das portable Gerät durch einen Benutzer an diese Lichtschranke zu halten. Die konkrete Ausgestaltung dieser optischen Schnittstelle ist dabei unerheblich für die vorliegende Erfindung. In bestimmten Ausführungsformen kann diese optische Schnittstelle einen Ausschnitt aus einem Bildschirm/Display an der Durchlass-Säule 51 beinhalten, so dass mit einer auf dem portablen Gerät implementierten Muster-Erkennung ein Challenge gelesen und ein Response auf die vorgenannte Art berechnet werden kann. Diese Art der Informationspräsentation am Bildschirm wird auch als «flickering» bezeichnet. Die Berechnung des Responses kann dabei aufgrund einer zusätzlichen Authentifizierung des Benutzers erfolgen. Nähere Angaben sind weiter bei der Erläuterung der Figur 5 zu entnehmen. Der Challenge kann aber ebenso über die zweite Kommunikationsfunkverbindung 70 übertragen werden. Zwischen Server 61 und Medium 10 läuft vorzugsweise ein PKI-gesichertes Challenge/ Response-Protokoll ab. Die die SmartCard 10 generiert aufgrund eines Challenge einen Response. Der Server 61 erkennt aus dem Response:
i) Die Berechtigung für den Zugang zu einem Dienst existiert.
ii) Die Berechtigung ist authentisch.
iii) Die SmartCard trägt zu Recht diese Berechtigung.
iv) Die Response ist aktuell.

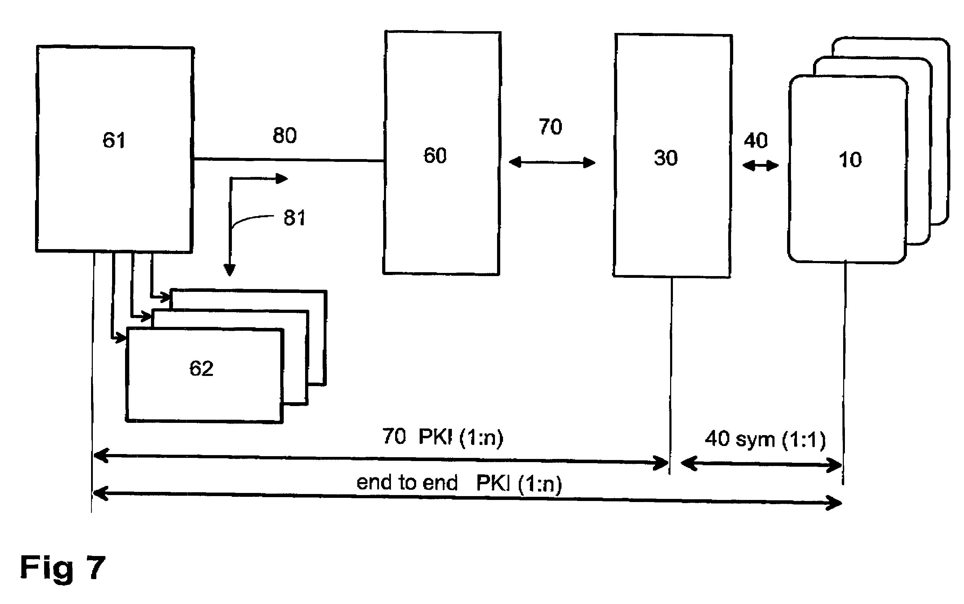

Es wird an dieser Stelle nochmals darauf hingewiesen, dass eine solche reale zugangszone 50 gemäss der Figur 1 lediglich ein Beispiel darstellt. Die Zugangseinheit 60 kann in entsprechender Ausprägung mit einem Server 61 gekoppelt sein, um auf diese Weise die Gewährung eines Dienstes zu erlauben, wie dies im Prinzip in der Figur 7 dargestellt ist. Die Zugangseinheit 60 kann auch als Personalcomputer 60 ausgestaltet sein. Dabei wird die vorgenannte optische Schnittstelle mit einem Bildschirm-Ausschnitt des Pesonalcomputers 60 realisiert. Der Server 61 gewährt aufgrund einer erfolgreichen Authentifizierung z.B. den Zugang zu einer kostenpflichtigen Internetseite oder zum Bezug einer bestimmten materiellen oder immateriellen Leistung.

Die in der Figur 1 nur summarisch dargestellte Hülle 20 ist in den Figuren 2.1, 2.2, 2.3, 3, 4.1 und 4.2 in extensiver Weise offenbart. Es wird an dieser Stelle ausdrücklich festgehalten, dass diese Hülle 20 ein nützliches Vehikel zur Ausführung des erfindungsgemässen Verfahrens darstellt, die Hülle 20 ist dazu jedoch in keiner Weise erforderlich.

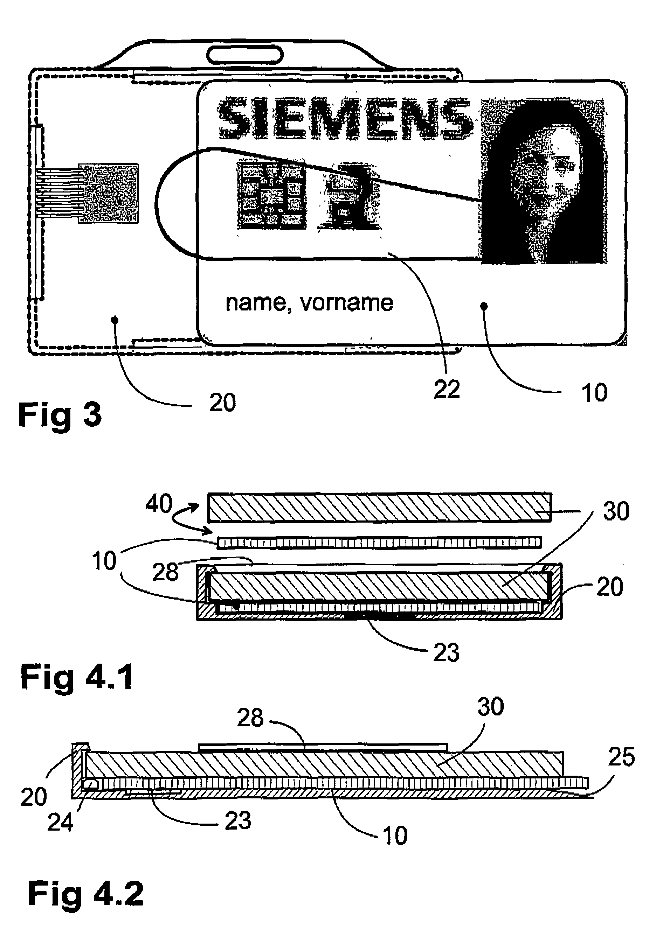

Die erste Kommunikationsverbindung 40 zwischen SmartCard 10 und portablen Gerät kann z.B. gemäss ISO 14443 drahtlos erfolgen: Eine Person braucht dazu die SmartCard 10 und das portable Gerät lediglich zusammen zuhalten wie dies im oberen Teil der Figur 4.1 summarisch dargestellt ist.

In besonders sensitiven Zonen ist auch heute noch eine Ausweistragepflicht statuiert. Hiefür ist eine Hülle 20 mit einem transparenten Deckel 28 vorgesehen, so dass das einer Person zugeordnete Bild der Person auf der SmartCard für Dritte sichtbar ist. Die Hülle 20, versehen mit portablen Gerät 30 und SmartCard 10 kann so sichtbar an einem Kleidungsstück getragen werden. Die konstruktive Ausgestaltung der Hülle 20 ist den Figuren 3, 4.1 und 4.2 zu entnehmen. Die Öffnung 22 wie in Figur 3 dargestellt, dient der leichteren Herausnehmbarkeit der Karte 10 aus der Hülle 20.

Für den Anwendungsfall, wo eine galvanische Verbindung wie z.B. nach ISO 7816 [3] zwischen SmartCard 10 und portablem Gerät 30 erforderlich ist, leistet die Hülle 20 gemäss den Figuren 2.1, 2.2, 2.3 und 3 die Kontaktierung zur Karte 10 mit einem Kontaktfeld 23. Die korrespondierende galvanische Kontaktierung mit dem portablen Gerät 30 erfolgt über die Kontakte 24, die vorzugsweise federnd ausgebildet sind, um mit einem bestimmten Druck eine sichere Verbindung zu gewährleisten. Die Hülle 20 weist keine weitere sogenannte intelligente Elektronik auf, sondern leistet lediglich eine zuverlässige galvanische Verbindung.

Im Falle einer drahtlosen Verbindung zwischen SmartCard 10 und portablen Gerät 30 hat die Hülle lediglich die Funktion einer mechanischen Verbindung, so dass die beiden Teile gegen zufälliges verlieren etwas geschützt sind.

Im praktischen Betrieb wird ein Benutzer zur Nutzung des modularen Systems verschiedene SmartCards 10 mit dem portablen Gerät 30 in Verbindung bringen. Bei Verwendung einer Hülle 20 ist dabei eine Einschuböffnung mit einer Rampe 25 vorgesehen, die das Einschieben erleichtert.

In Figur 5 ist ein Blockschaltbild eines portablen Gerätes 30 in einer bevorzugten Ausführungsform dargestellt. Dabei sind Komponenten wie Energieversorgung und Prozessorsystem wie z.B. ein Single-Chip-Prozessor 8051, nicht im einzelnen dargestellt. Die vorgenannte erste Kommunikationsverbindung 40 zwischen SmartCard 10 und Gerät 30 erfolgt einerseits über eine galvanische Schnittstelle-Einheit 321 nach z.B. ISO 7816. Andererseits ist eine Funkschnittstellen-Einheit 322 nach z.B. ISO 14443 vorgesehen. Auf der Karte 10 sind in dieser Ausführungsform zwei Kryptocontroller 15 mit je einem Secure Application Module SAM 151 angeordnet. Die Kommunikation erfolgt beispielsweise für den einen Controller 15 über eine Kontaktschnittstellen-Einheit 321 und für den anderen Controller 15 über eine Funkschnittstelle-Einheit 322 im unmittelbaren Nahbereich.

Auf dem portablen Gerät 30 ist ebenfalls ein Krypotcontroller 35 mit wenigstens einem Secure Application Module SAM 351 angeordnet. Diese Kryptocontroller 15 und 35 leisten eine gesicherte Verbindung 40 zwischen SmartCard 10 und portablen Gerät 30 wie auch zwischen portablem Gerät und Zugangseinheit 60. Im Kryptocontroller 15 können für den Anwendungsfall einer biometrischen Authentifizierung z.B. Fingerprint-Minutien und/oder Schlüssel für weitere biomtrische Authentifizierungsverfahren enthalten sein. Ebenso können in den Kryptocontrollern 15 und 35 sogenannte digitale «identity credentials» gespeichert sein. Mit dem Kryptocontroller 15 zwischen Smartcard 10 und Zugangseinheit 60 eine gesicherte End-zu-End-Verbindung in einer Art Tunnelling realisiert. Die zugrunde liegenden Verfahren sind dem Stand der Technik zu entnehmen, die Sicherung erfolgt vorzugsweise nach einem asymmetrischen PKI-Verfahren oder nach dem symmetrischen sogenannten 3DES-Verfahren. Die Kommunikationsverbindung 70 zwischen Zugangseinheit 60 und portablem Gerät 30 kann realisiert mit:
- Weitbereichsfunkschnittstelle 311, «Long Range Communication» mit einem zweistufigen Übertragungsverfahren, z.B. wie in EP 1 210 693 B1 [8] offenbart;
- Funkschnittstelle 312 «Short Range Communication» nach ISO 14443;
- Optisches Interface 313.

Anstelle oder zusätzlich zur vorgenannten Funkschnittstelle nach ISO 14443 kann auch eine NFC-Schnittstelle vorgesehen sein, die die Schnittstelle nach ISO 14443 umfasst. An dieser Stelle wird zur Vermeidung von Missverständnissen darauf hingewiesen, dass die Schnittstellen-Einheit 312 nach z.B. ISO 14443 eine völlig andere Funktion hat als die Schnittstellen-Einheit 322. Auf diese Weise ist eine Emulation für bereits installierte Kartenleser möglich, ohne dass die betreffende SmartCard 10 hierfür geeignet sein muss, da dies vom portablen Gerät 30 und nicht von der momentan gekoppelten SmartCard 10 abhängig ist.

Zur Interaktion zwischen einem Benutzer und dem portablen Gerät 30 sind alternativ oder kumulativ vorzusehen:
- Anzeige 33;
- Taste oder Tastenfeld 342;
- Biometrischer Sensor 341, z.B. Fingerabdrucksensor.

Die in einem solchen Gerät enthaltene funktionelle Komplexität erfordert in den meisten Anwendungsfällen eine Konfigurierung. Diese Konfigurierung erfolgt vorzugsweise über eine drahtgebundene Schnittstelleneinheit 314, z.B. USB.

Möglich ist, diese drahtgebundene Schnittstelle kumulativ oder alternativ zur zweiten drahtlosen Kommunikationsverbindung 70 zu verwenden, z.B. für einen Zugang zu einem über einen Personalcomputer angebotenen Dienst wie bestimmte Inhalte von kostenpflichtigen Internetseiten.

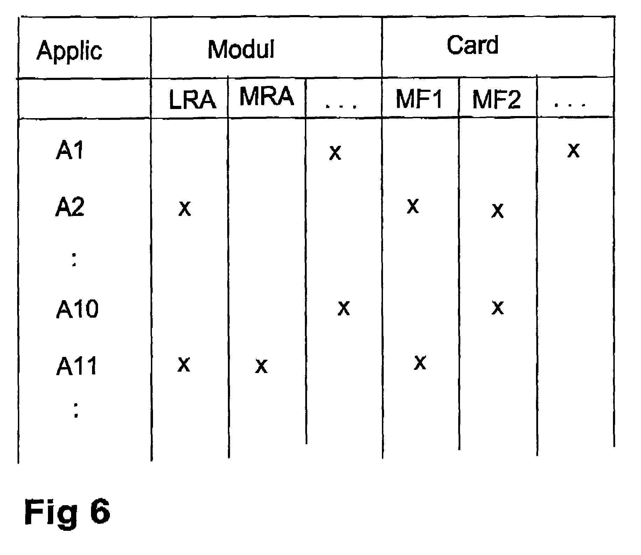

Das vorgenannte modulare System für den Zugang zu den verschiedenen Diensten ist in Figur 6 tabellenartig dargestellt. In der Spalte Applic sind mit den Bezeichnern A1, A2, potentiell verfügbare Dienste aufgeführt wie z,B.
- zugang zu einem Gebäude,
- E-Banking bei einer Bank,
- Automatenzugang Geldausgabeautomat,
- Internetzugang für die Seiten eines bestimmten Anbieters,
- Elektronisches Ticket eines Nahverkehrsunternehmens,
- Gesundheitsdaten einer Person,
- ..

Für jeden solchen Dienst sind nun die vorgesehenen oder zugelassenen physischen Kommunikationsverbindungen definiert. Der «Erlaubnisträger» eines betreffenden Dienstes ist eine bestimmte SmartCard MF1, MF2, .. , auf der ein den personifizierten Dienst spezifizierendes Kennzeichen enthalten ist. Dabei kann vorgesehen werden, soweit das die Dienstanbieter erlauben, dass auf einer SmartCard mehrere je einen Dienst spezifizierende Kennzeichen gespeichert in eigenen Segmenten gespeichert sind.

Die vorgenannte Zuordnung ist entweder allein auf der SmartCard 10 gespeichert oder auch auf dem portablen Gerät 30. Wie bereits ausgeführt, wird diese Zuordnung bzw. Konfiguration des Gerätes vorzugsweise über eine drahtgebundene Schnittstelleneinheit 314 wie z.B. USB vorgenommen. Auf diese weise wird bei der Initiierung zur Nutzung eines Dienstes die dafür vorgenommene Kommunikationsverbindungsart ausgewählt.

Die mit der klassischen Technik verbundenen Funktionen eines Kartenlesers können durch die vorliegend offenbarten Ausführungsformen der Erfindung frei auf das portable Gerät 30 und die Zugangseinheit 60 verteilt werden und erlauben somit eine sehr flexible Anpassung an verschiedenste Anwendungen, dies betrifft insbesondere den Ort der sogenannten Terminierung.

Figur 7 zeigt die Kommunikationsverbindungen und die damit verbundenen Dienste in einer vevorzugten Ausführungsform. Die Dienste sind entweder einer Mehrzahl von SmartCards 10 mit je einem dienstspezifischen Kennzeichen zugeordnet oder eine SmartCard 10 enthält eine Mehrzahl von solchen dienstspezifischen Kennzeichen. Die Übertragung 40 zwischen SmartCard 10 und portablen Gerät ist meist über eine symmetrische Verschlüsselung gesichert, weil für diese eine 1:1 Beziehung besteht. Demgegenüber ist die Kommunikationsverbindung 70 von portablen Gerät über die Zugangseinheit 60 zum Server 61 mit einem PKI-Verfahren gesichert, da hier eine 1:n Beziehung besteht. Als Ergebnis der beiden gesicherten Verbindungen 40 und 70 ergibt sich somit zwischen der SmartCard 10 und dem Server 61 ein gesichertes end-to-end-Protokoll. Es liegt hier kein Widerspruch vor, wenn für die Verbindung zwischen Server 61 und Gerät 30 das Bezugszeichen 70 verwendet wird, da die Zugangseinheit 60 in der Regel nur eine Transitfunktion hat, d.h. es werden darin weder zugangsberechtigungen geprüft noch etwas für die Sicherung der Verbindung vorgekehrt. Aufgrund der vorstehend genannten Prüfung, d.h. Auhentifizierung, wird vom Server 61 ein Freigabesignal an den betreffend Dienstserver 62 abgegeben. Der Dienst wird dabei über eine Verbindung 81 dem Nutzer zugeteilt oder gewährt. Die Erbringung dieses Dienstes kann auf vielfältige Weise erfolgen und ist deshalb in der Figur 7 nur sehr rudimentär dargestellt. Die Verbindung 70 kann optional aber für bestimmte Dienst ebenfalls im Nahbereich zu einer Zugangseinheit 60 etabliert werden. Dazu ist im Blockschaltbild gemäss der Figur 5 eine Schnittstelle 312 nach ISO 14443 enthalten.

Die vorliegende Erfindung ist realisierbar mit verschiedensten Kartensystem wie z.B. Legic oder Mifare. Darüber hinaus auch anwendbar für verschiedene Karten des gleichen Kartensystem, nämlich, dann wenn der Unterschied nur den Herausgeber oder den Inhaber der Karte betrifft.

### Liste der verwendeten Bezugszeichen, Glossar

- 10: Elektronische Karte, Chip-Card, Proximitiy-Card, Vinicinity-Card; Medium
- 15: auf der Karte 10 residenter Kryptocontroller
- 151: dem Kryptocontroller zugeordneter Secure Application Module SAM
- 20: Hülle zur Aufnahme einer Karte 10 und eines Moduls 30
- 21: Öffnung für ein Befestigungselement, z.B. Clips
- 22: Öffnung für das Herausschieben der Karte 10
- 23: Kontaktfeld, z.B. zur Kontaktierung einer Karte 10 gemäss ISO 7816
- 24: Kontakte zur Kontaktierung eines Moduls 30
- 25: Einschuböffnung, Rampe zum erleichterten Einschieben einer Karte
- 28: Deckel, transparenter Deckel
- 30: Portables Gerät, Sende-/Empfangseinheit, Modul, Kommunikationsmodul für «physical access», Token
- 311: weitbereichsfunkschnittstelle, «long range»
- 312: Schnittstelle nach ISO 14443 oder NFC-Schnittstelle
- 313: Optisches interface
- 314: drahtgebundene Schnittstelle, z.B. USB
- 321: drahtgebundene Schnittstelle zur Smartcard 10, z.B. nach ISO 7816
- 322: Schnittstelle zur Smartcard 10, z.B. nach ISO 1443
- 323: optionale weitere Schnittstelle zu anderem Medium 10
- 33: Anzeige, Display, z.B. realisiert als Folien-Display
- 341: Biometrischer Sensor, z.B. Fingerabdrucksensor
- 342: Taste, Tastenfeld
- 35: Kryptocontroller
- 351: dem Kryptocontroller 35 zugeordneter Secure Application Module SAM
- 40: Erste Kommunikationsverbindung
- 50: Durchgangszone, Durchgangsbereich
- 51: Säule
- 52: Lichtschranke, «engl. light barrier»
- 60: Zugangseinheit, Personalcomputer engl. «Access point»
- 61: Server, Hintergrundsystem, Rechnersystem, Managementsystem zur Auswertung der Kennzeichen und zur Generierung eines Freigabesignals zur Gewährung eines Dienstes
- 62: Dienstserver, Serversystem enthaltend den zu erbringenden Dienst
- 70: zweite Kommunikationsverbindung, bidirektionale Kommunikation
- 80: Verbindung zwischen Zugangseinheit 60 und Server 61
- A1, A2,: Konkrete Ausprägungen eines Dienstes, wie z.B.
- Elektronisches Ticketing,
- Gebäude Zutritt,
- E-Commerce über Internet,
- E-Banking-Dienst einer Bank,
etc.

### Applic Dienst, Anwendung,

- LRA: Long Range Access
- MF1, MF2,: ..Mifare Karte 1, Mifare Karte 2, ..
- MRA: Mid Range Access
- SAM: Secure Application Module

### Liste der verwendeten Akronyme

- 3DES: Triple DES
- DES: Data Encryption Standard, nach ANSI- X3.92-1981 normiertes Private-Key-Verfahren
- NFC: Near Field Communication gemäss
http://www,nfc-forum.org
- PCD: Proximity Coupling Device; gemäss ISO 14443
- PICC: Proximity Cards; gemäss ISO 14443
- PKI: Public Key Infrastructure
- USB: Universal Serial Bus

### Literaturliste

[1] ISO/IEC 14443-1
   «Identification cards - Contactless integrated circuit(s) cards - Proximity cards»-
   Part 1:
      Physical characteristiscs
      ISO/IEC 14443-2
      «Identification cards - Contactless integrated circuit(s) cards - Proximity cards»-
   Part 2:
      Radio frequency power and signal interface
[2] ISO/IEC 15693-1
   «Identification cards - Contactless integrated circuit(s) cards - Vicinity cards»-
   Part 1:
      Physical characteristiscs
      ISO/IEC 15693-2
      «Identification cards - Contactless integrated circuit(s) cards - Vicinity cards»-
   Part 2:
      Air interface and initialization
      ISO/IEC 15693-2
      «Identification cards - Contactless integrated circuit(s) cards - Vicinity cards»-
   Part 3:
      Anticollision and transmission protocol
[3] ISO/IEC 7816-1
   «Identification cards - Integrated circuit(s) cards with contacts»-
   Part 1:
      Physical characteristics
      ISO/IEC 7816-1
      «Identification cards - Integrated circuit(s) cards with contacts»-
   Part 2:
      Dimensions and Location of the contacts
[4] Nedap N. V.
   NL - 7140 AC Groenlo
[5] EP 0 575 013 A1
   «System for the contactless exchange of datga, and responder for use in such a system»
   N.v Nederlandsche Apparatenfabriek NEAP
[6] DE 101 04 409 A1, DE 101 04 409 B4
   Verbindungsauswahl über einen optischen Code WINCOR NIXDORF International GmbH, 3106 Paderborn
[7] Europäischen Patentanmeldung EP 05013418.8
   Anmelderin: Siemens Schweiz AG
   Anmeldetag: 22.06.2005
   Titel: «Verfahren, elektronische Hülle und
   Zugangseinheit zur Gewährung des zutritts zu einer
   Zone mit einer Karte»
[8] EP 1 210 693 B1
   «Verfahren und System zur Registrierung von Billetten»
   Siemens VDO Automotive AG,
   CH - 8212 Neuhausen am Rheinfall

## Patentansprüche

1. verfahren zur berechtigten Gewährung eines Dienstes (Appl) mit einem elektronischen Medium (10), auf dem eine Berechtigung mit einem Kennzeichen dienstspezifisch gespeichert ist; wobei
das dienstspezifische Kennzeichen über eine erste gesicherte Kommunikationsverbindung (40) zwischen dem Medium (10) und einem portablen Gerät (30) im Nahbereich übertragen wird;
- das dienstspezifische Kennzeichen über eine zweite gesicherte Kommunikationsverbindung (70) zwischen dem portablen Gerät (30) und einer Zugangseinheit (60) übertragen wird,
- bei Übereinstimmung des von der Zugangseinheit (60) empfangenen Kennzeichens mit einem gespeicherten Kennzeichen ein Freigabesignal zur Gewährung des Dienstes (Appl) erzeugt wird;
**dadurch gekennzeichnet, dass**
die erste Kommunikationsverbindung (40) zwischen dem portablen Gerät und dem Medium (10) für eine Mehrzahl von auf dem Medium (10) gespeicherten dienstspezifischen Kennzeichen und/oder für Mehrzahl von verschiedene Typen von Medien (10) aufbaubar ist, so dass für jeden Dienst (Appl) zwischen zugangseinheit (60) und Medium (10) eine gesicherte End-zu-End-Verbindung (30, 70) aufgebaut wird.

2. Verfahren nach Anspruch 1,
**dadurch gekennzeichnet, dass**
die Übereinstimmung des von der Zugangseinheit (60) empfangenen Kennzeichens mit einem gespeicherten Kennzeichen in einem mit der Zugangseinheit (60) gekoppelten Server (61) geprüft wird.

3. Verfahren nach Anspruch 2,
**dadurch gekennzeichnet, dass**
im portablen Gerät (30) ein weiteres Kennzeichen gespeichert ist, das über die zweite Kommunikationsverbindung (70) übermittelt wird und dass das Freigabesignal nur dann erzeugt wird, wenn das weitere Kennzeichen mit einem gespeicherten weiteren Kennzeichen übereinstimmt.

4. Verfahren nach Anspruch 3,
**dadurch gekennzeichnet, dass**
auf dem portablen Gerät (30) ein Eingabemittel (31) vorgesehen ist, so dass das weitere Kennzeichen nur dann über die zweite Kommunikationsverbindung (70) übermittelt wird, wenn ein Code über das Eingabemittel (31) eingegeben wird und Gleichheit mit einem gespeicherten Code festgestellt wird.

5. Verfahren nach Anspruch 4,
**dadurch gekennzeichnet, dass**
der gespeicherte Code entweder im portablen Gerät (30) oder in der Zugangseinheit (60) oder im Server (61) gespeichert ist und dass wenigstens ein übertragenes Kennzeichen gegenüber dem gespeicherten Kennzeichen aufgrund einer Authentifizierung modifiziert wird.

6. Verfahren nach einem der Ansprüche 3 bis 5,
**dadurch gekennzeichnet, dass**
das weitere Kennzeichen gemäss dem Challenge-Response-Verfahren gebildet wird.

7. Verfahren nach einem der Ansprüche 3 bis 6,
**dadurch gekennzeichnet, dass**
der eingegebene Code durch ein biometrisches Verfahren gebildet wird.

8. Verfahren nach einem der Ansprüche 1 bis 7,
**dadurch gekennzeichnet, dass**
das portable Gerät (30) eine Mehrzahl von Funkschnittstellen aufweist (321, 312) und dass die zweite Kommunikationsverbindung (70) abhängig vom mittels des Kennzeichens definierten Dienstes (Appl) aus der vorgenannten Mehrzahl ausgewählt wird.

9. Verfahren nach einem der Ansprüche 1 bis 8,
**dadurch gekennzeichnet, dass**
die erste Kommunikationsverbindung (40) galvanisch und/oder über Funk aufgebaut wird.

10. verfahren nach einem der Ansprüche 1 bis 9,
**dadurch gekennzeichnet, dass**
die gesicherten Verbindungen (40, 70) nach dem PKI-Verfahren oder nach dem 3DES-Verfahren aufgebaut werden.

11. Elektronisches portables Gerät (30) zur Durchführung des Verfahrens nach einem der Ansprüche 1 bis 10, welches Gerät (30) enthält:
- wenigstens eine Schnittstelleneinheit (321, 322) über die eine erste gesicherte Kommunikationsverbindung (40) im Nahbereich zu einem ein Kennzeichen enthaltenden Medium (10) führbar ist;
- wenigstens eine Funkschnittstelleneinheit (311, 312) über die eine zweite gesicherte Kommunikationsverbindung (70) zu einer Zugangseinheit (60) führbar ist;
- einen Kryptocontroller (35) der mit der Schnittstelleneinheit (321, 322) und der Funkschnittstelleneinheit (311, 312) verbunden ist;
wobei ein dienstspezifisches Kennzeichen vom Medium (10) zur Zugangseinheit (60) für die eine berechtigten Gewährung eines Dienstes (Appl) übertragen wird und wobei bei Übereinstimmung des von der Zugangseinheit (60) empfangenen Kennzeichens mit einem gespeicherten Kennzeichen ein Freigabesignal zur Gewährung des Dienstes (Appl) erzeugt wird;
**dadurch gekennzeichnet, dass**
die erste Kommunikationsverbindung (40) zwischen der wenigstens eine Schnittstelleneinheit (321, 322) und dem Medium (10) für eine Mehrzahl von auf dem Medium (10) gespeicherten dienstespezifischen Kennzeichen und/oder für Mehrzahl von verschiedene Typen von Medien (10) aufbaubar ist, so dass für jeden Dienst (Appl) zwischen Medium (10) und Zugangseinheit (60) mittels des Kryptocontrollers eine gesicherte End-zu-End-Verbindung (30, 70) aufbaubar ist.

12. Gerät (30) nach Anspruch 11;
**dadurch gekennzeichnet, dass**
ein Eingabemittel (341, 342) mit dem Kryptocontroller (35) gekoppelt ist, um eine Authentifizierung einer dem dienstspezifischen Kennzeichen zugeordneten Person vorzunehmen oder um einen bestimmten Betriebszustand einzustellen.

13. Gerät (30) nach Anspruch 12,
**dadurch gekennzeichnet, dass**
als Eingabemittel eine Tastenfeld (342) oder ein biometrischer Sensor (341) mit dem Kryptocontroller (35) gekoppelt ist.

14. Gerät (30) nach Anspruch 13,
**dadurch gekennzeichnet, dass**
der biometrische Sensor (341) als Fingerprint-Sensor ausgebildet ist.

15. Gerät (30) nach einem der Ansprüche 11 bis 14,
**dadurch gekennzeichnet, dass**
eine Anzeige (33) mit dem Kryptocontroller (35) gekoppelt ist, an der Betriebszustände oder Challenges oder Responses anzeigbar sind.

16. Gerät (30) nach einem der Ansprüche 11 bis 15,
**dadurch gekennzeichnet, dass**
wenigstens eine drahtgebundene Schnittstelle (314) vorgesehen ist, um darüber Konfigurationsdaten zum Gerät (30) zu übertragen.

17. Hülle (20) zur Sicherung einer Kommunikationsverbindung (40) zwischen einer Medium (10) und einem portablen Gerät (30) nach einem der Ansprüche 11 bis 16,
**dadurch gekennzeichnet, dass**
SmartCard (10) und portables Gerät (30) mechanisch miteinander gekoppelt sind.

18. Hülle (20) nach Anspruch 17,
**dadurch gekennzeichnet, dass**
die Hülle (20) elektrische Kontakte (23, 24) enthält, um eine galvanische Verbindung (40) zwischen Medium (10) und portablem Gerät (30) zu ermöglichen.
